# EUROPÄISCHE PATENTSCHRIFT

(11) **EP 2 553 285 B1**
(45) Veröffentlichungstag und Bekanntmachung des Hinweises auf die Patenterteilung: **15.07.2015**
(21) Anmeldenummer: 11710774.8
(22) Anmeldetag: 24.03.2011
(51) Int. Cl.: F16C 33/12, F16C 33/62

(54) **LAGERRING EINES GLEIT- ODER WÄLZLAGERS**
BEARING RING OF A PLAIN OR ROLLING BEARING
BAGUE D'UN PALIER LISSE OU D'UN PALIER À ROULEMENT

(30) Priorität: 01.04.2010 DE 102010013630
(43) Veröffentlichungstag der Anmeldung: 06.02.2013
(73) Patentinhaber: Aktiebolaget SKF, 415 50 Göteborg (SE)
(72) Erfinder: MEYER, Wilhelm, 97453 Reichmannshausen (DE); WOHLFEIL, Florian, 97464 Niederwerrn (DE)
(74) Vertreter: Schonecke, Mitja
(86) Internationale Anmeldenummer: PCT/EP2011/054528
(87) Internationale Veröffentlichungsnummer: WO 2011/120866

(56) Entgegenhaltungen:
- DE-A1- 2 262 429
- US-A- 4 113 899

## Beschreibung

Die Erfindung betrifft einen Lagerring eines Gleit- oder Wälzlagers, der eine ringförmige Struktur mit einer Laufbahn aufweist, wobei der Lagerring aus einem Grundkörper besteht, wobei zumindest im Bereich der Laufbahn auf den Grundkörper eine Trägerschicht aufgebracht ist und wobei auf die Trägerschicht eine Hartstoffschicht aufgebracht ist, die die Laufbahnoberfläche bildet.

Ein Lagerring dieser Art ist in der WO 2001/033091 A1 beschrieben. Ähnliche und andere Lösungen offenbaren die DE 6 906 209 U**,** die DE 102 59 003 A1**,** die WO 2008/068130 A2, die WO 2005/106065 A1**,** die DE 102 22 696 A1**,** die JP 2008-82411 A, die DE 10 2008 024 055 A1 und die DE 10 2006 008 438 A1 bekannt. Um das Lager preisgünstig zu realisieren, ist bei der zuletzt genannten Lösung vorgesehen, dass ein dünner Ring aus hartem Material auf einen Lagerring-Grundkörper aufgeklebt ist. Der Lagerring muss daher nicht vollständig aus Kugellagerstahl, zumeist des Stahltyps 100 Cr 6, bestehen. Nur der Ring aus hartem Material bildet die Laufbahn des Lagerrings und muss aus hartem und entsprechend teurem Material bestehen.

In der DE 22 62 429 A1 wird eine Stützfläche beschrieben, bei der auf einer Kunststoffoberfläche eine Schicht aus Nickel, Kupfer und/oder Chrom abgeschieden wird. Die US 4 113 899 offenbart eine ähnliche Lösung.

In vielen Anwendungsbereichen ist es absolut ausreichend, eine Lösung vorzusehen, bei der der Lagerring zwar eine gewisse Haltbarkeit bezüglich seiner Laufbahn haben muss, die allerdings ansonsten keine besonders hohen Forderungen an die Genauigkeit und Stabilität des Lagerrings stellt. Bei solchen Anwendungen stehen vielmehr die Kosten für die Herstellung der Lagerung im Vordergrund.

Der Erfindung liegt daher die Aufgabe zugrunde, einen Lagerring der eingangs genannten Art bereitzustellen, der zwar eine hinreichende Haltbarkeit und Verschleißresistenz aufweist, der sich aber auch in besonders vorteilhafter Weise wirtschaftlich herstellen lässt. Die Wirtschaftlichkeit soll sich insbesondere auf den zum Einsatz kommenden Materialbedarf für den Lagerring beziehen. Eine weitere Zielsetzung ist das Bereitstellen eines Lagerrings, das sich durch ein geringes Gewicht auszeichnet.

Die Lösung dieser Aufgabe durch die Erfindung ist dadurch gekennzeichnet, dass die Trägerschicht aus einem aushärtbaren Harz besteht, der mit metallischen Partikeln versehen ist, wobei die Hartstoffschicht aus Nickel besteht und wobei der Grundkörper aus Kunststoff besteht.

Demgemäß ist erfindungsgemäß ein mindestens dreischichtiger Verbund vorgesehen, der aus dem Grundkörper, einer Trägerschicht und einer Hartstoffschicht, die die Laufbahn selber bildet, zusammengesetzt ist.

Der Grundkörper kann dabei aus einem Thermoplast bestehen. In den Kunststoff können Verstärkungsfasern, insbesondere Glas- oder Kohlenstofffasern, eingelagert sein.

Es ist also möglich, preiswerte Materialien hier einzusetzen, die dann in der oben erwähnten Weise mit einer Trägerschicht und der Hartstoffschicht versehen werden. Demgemäß ist die Verschleißfestigkeit des Materials des Grundkörpers selber nicht von ausschlaggebender Bedeutung.

Die Trägerschicht ist gemäß einer bevorzugten Ausführungsform der Erfindung ein Epoxidharz. Bei den metallischen Partikeln handelt es sich bevorzugt um solche aus Stahl oder aus Leichtmetall, insbesondere aus Aluminium. Die metallischen Partikel können auch aus Ferrosilizium bestehen.

Dabei sieht eine bevorzugte Lösung vor, dass die Nickelschicht durch einen chemischen Prozess aufgebracht ist (sog. Chemisch-Nickel).

Gemäß der Erfindung wird ein Lagerring für eine Wälz- oder Gleitlagerung bereitgestellt, die besonders für geringe Belastungen geeignet ist und die sich durch ein geringes Gewicht auszeichnet.

Der Grundkörper des Lagerrings besteht beispielsweise aus einem Fasermaterial (Kohlefasern) oder aus einem Kunststoff (insbesondere Thermoplast) mit Faserverstärkung (insbesondere mit Glasfasern) bzw. mit einer Stahlarmierung. Zum Einsatz können auch Phenolharze als Ringmaterial kommen. Bevorzugt ist auch preiswerter Stahl (Baustahl, insbesondere St 37) oder Stahlblech; auch Leichtmetalle wie Aluminium sind geeignet.

Die Laufbahn selber wird von einem Hartmaterial gebildet. Hierbei ist insbesondere an chemisch aufgebrachtes Hartnickel gedacht. Damit diese Hartschicht hinreichenden Halt auf dem breiten Spektrum der zum Einsatz kommenden Materialien des Grundkörpers des Lagerrings hat, wird eine Trägerschicht zwischen Grundkörper und Hartschicht eingesetzt. Diese Hartschicht hat bevorzugt metallische Partikel, die es der Hartstoffschicht in besonders vorteilhafter Weise erlaubt, sich sehr fest anzulagern.

Mit dem Vorschlag gemäß der Erfindung ist es möglich, eine sehr gut anhaftende, harte und dünne Laufbahn an einem Ring-Grundkörper anzulagern, der aus fast beliebigem und auch preiswertem Material besteht.

Die genannte Materialauswahl erlaubt es, in den verschiedensten Anwendungen bei hohen Anforderungen an Umweltbedingungen eine preiswerte und verschleißstabile Lagerung zur Verfügung zu stellen.

Bislang wurden in Serienanwendungen zumeist übliche Materialien wie Stahl und Leichtmetalllegierungen, gegebenenfalls auch mit Oberflächenveredlung, eingesetzt. Schwierig war es dabei, spezielle anwendungsspezifische geforderte Eigenschaften zu befriedigen, beispielsweise hinsichtlich der benötigten Dämpfung oder hinsichtlich der magnetischen Eigenschaften des Lagerrings.

Durch das relativ geringe Gewicht des Lagerrings werden auch Anwendungen begünstigt, bei denen hohe Beschleunigungen des Lagers auftreten. Der Energiebedarf ist entsprechend geringer, was die Umwelt-Ressourcen schont.

Es ist möglich, eine einfache Integration der Lagerfunktion in Anbauteile bzw. in ein Gehäuse zu realisieren, bzw. ist es auch leichter möglich, Umbauteile in das Lager zu integrieren. Es können kostengünstig nichtrostenden Ringe zur Verfügung gestellt werden.

Vorteilhaft ist weiterhin, dass eine Wärmebehandlung der Laufbahnen nicht erforderlich ist, was gerade bei sehr filigranen Lagerringen aus Blech oder mit einem Flansch ansonsten zu Verzug der Bauteile führt.

Mögliche Anwendungsgebiete des erfindungsgemäßen Lagers sind unter vielem anderen die Medizintechnik und die Handhabungstechnik.

In der Zeichnung ist ein Ausführungsbeispiel der Erfindung dargestellt. Es zeigen:
- Fig. 1: den Radialschnitt durch einen Innenring eines Wälzlagers,
- Fig. 2: die Vergrößerung "X" gemäß Fig. 1.

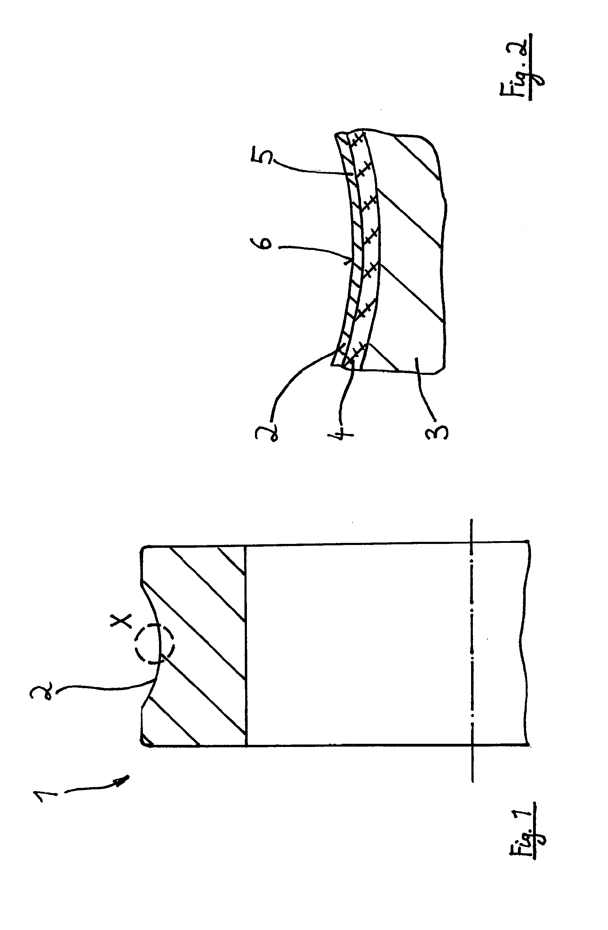

In Fig. 1 ist ein Lagerring 1 eines Kugellagers zu sehen. Er hat eine Laufbahn 2, die der Form des abrollenden Wälzkörpers, hier also der Kugel, angepasst ist. Der Aufbau des Lagerrings 1 ist in der vergrößerten Darstellung gemäß Fig. 2 zu entnehmen.

Hiernach besteht der Lagerring 1 aus einem Grundkörper 3. Der Grundkörper ist grundsätzlich aus einem preiswerten Material gefertigt, beispielsweise aus Baustahl, wobei insbesondere an den Typ St 37 gedacht ist.

Allerdings kann der Grundkörper 3 auch aus anderen Materialien bestehen, die sich beispielsweise durch ein geringes Gewicht auszeichnen. So kann der Grundkörper auch aus Kunststoff bestehen, z. B. aus einem Thermoplast in den Verstärkungsfasern (Kohlenstofffasern oder Glasfasern) eingelagert sind.

Auf den vorgefertigten Grundkörper 3 mit der bereits genau gefertigten Kontur der Laufbahn 2 wird in einem folgenden Fertigungsschritt eine Trägerschicht 4 aufgebracht. Wesentlich ist, dass diese Trägerschicht 4 zumeist metallische Partikel umfasst, die es nachfolgend möglich machen, dass eine Hartstoffschicht 5 auf der Trägerschicht 4 fest angeordnet werden kann. Demgemäß bilden der Grundkörper 3, die Trägerschicht 4 und Hartstoffschicht 5 einen festen Verbund.

Bei der Trägerschicht 4 handelt es sich beispielsweise und bevorzugt um eine solche, die aus einem Epoxidharz bzw. Epoxidklebstoff besteht, das bzw. der mit metallischen Partikeln in Form von Stahl, Aluminium oder Ferrosilizium versetzt ist. Derartige Gemische sind als Epoxy-Flüssigmetalle bekannt und werden beispielsweise unter der Marke Loctite Hysol vertrieben. In diesem Falle wird das Material der Trägerschicht 4 mechanisch auf den Grundkörper 3 aufgetragen. Nach der Aushärtung des Materials der Trägerschicht 4 ist es auch möglich, diese mechanisch (spanend) zu bearbeiten, um die genaue Form der Laufbahn zu erzeugen.

Auf die aufgebrachte und verfestigte und gegebenenfalls exakt auf Form gebrachte Trägerschicht 4 wird - wie bereits erwähnt - eine Hartstoffschicht 5 aufgebracht, die die Laufbahnoberfläche 6 (s. Fig. 2) bildet. Bevorzugt ist hier an eine Chemisch-Nickel-Schicht gedacht, die auf der Trägerschicht 4 dann besonders gut haftet, wenn letztere metallische Partikeln aufweist.

Die Hartstoffschicht 5 kann relativ dünn sein, z. B. im Bereich von 10 bis 50 □m. Die Härte liegt typischer Weise im Bereich von 60 bis 63 HRC im ungetemperten Zustand und bei ca. 70 HRC im getemperten Zustand.

Für das Aufbringen der Trägerschicht 4 auf den Grundkörper 3 kommen auch andere Verfahren als der mechanische Auftrag in Frage.

Generell eignen sich alle Verfahren, mit denen eine Metallisierung des Substrats, d. h. des Grundkörpers 3 erfolgen kann.

Hierfür sind der elektrochemische Beschichtungsprozess (galvanisches Beschichten), das chemische Beschichten, das Plasma- bzw. Flammspritzen, das Plattieren, das Lackieren oder das Vakuumbeschichten bekannt. Gerade für das Metallisieren von Kunststoffen hat sich das Vakuumbeschichten besonders bewährt, bei dem wiederum zwischen Aufdampfen, Sputtern, Beschichten mittels Vakuumbogen und anodischem Bogen unterschieden wird.

### Bezugszeichenliste

- 1: Lagerring
- 2: Laufbahn
- 3: Grundkörper
- 4: Trägerschicht
- 5: Hartstoffschicht
- 6: Laufbahnoberfläche

## Patentansprüche

1. Lagerring (1) eines Gleit- oder Wälzlagers, der eine ringförmige Struktur mit einer Laufbahn (2) aufweist, wobei der Lagerring (1) aus einem Grundkörper (3) besteht, wobei zumindest im Bereich der Laufbahn (2) auf den Grundkörper (3) eine Trägerschicht (4) aufgebracht ist und wobei auf die Trägerschicht (4) eine Hartstoffschicht (5) aufgebracht ist, die die Laufbahnoberfläche (6) bildet,
**dadurch gekennzeichnet, dass**
die Trägerschicht (4) aus einem aushärtbaren Harz besteht, der mit metallischen Partikeln versehen ist, wobei die Hartstoffschicht (5) aus Nickel besteht und wobei der Grundkörper (3) aus Kunststoff besteht.

2. Lagerring nach Anspruch 1, **dadurch gekennzeichnet, dass** der Grundkörper (3) aus einem Thermoplast besteht.

3. Lagerring nach Anspruch 2, **dadurch gekennzeichnet, dass** in den Kunststoff Verstärkungsfasern, insbesondere Glas- oder Kohlenstofffasern, eingelagert sind.

4. Lagerring nach einem der Ansprüche 1 bis 3, **dadurch gekennzeichnet, dass** die Trägerschicht (4) aus Epoxidharz besteht.

5. Lagerring nach einem der Ansprüche 1 bis 4, **dadurch gekennzeichnet, dass** die metallischen Partikel aus Stahl oder aus Leichtmetall, insbesondere aus Aluminium, bestehen.

6. Lagerring nach einem der Ansprüche 1 bis 4, **dadurch gekennzeichnet, dass** die metallischen Partikel aus Ferrosilizium bestehen.

7. Lagerring nach einem der Ansprüche 1 bis 6, **dadurch gekennzeichnet, dass** die Nickelschicht durch einen chemischen Prozess aufgebracht ist.

## Claims

1. Bearing ring (1) of a plain or rolling bearing, which bearing ring has an annular structure with a raceway (2), the bearing ring (1) consisting of a main body (3), a support layer (4) being applied to the main body (3) at least in the region of the raceway (2), and a hard material layer (5), which forms the raceway surface (6), being applied to the support layer (4),
**characterized in that**
the support layer (4) consists of a curable resin provided with metallic particles, the hard material layer (5) consisting of nickel and the main body (3) consisting of plastic.

2. Bearing ring according to Claim 1, **characterized in that** the main body (3) consists of a thermoplastic.

3. Bearing ring according to Claim 2, **characterized in that** reinforcing fibres, in particular glass or carbon fibres, are incorporated in the plastic.

4. Bearing ring according to one of Claims 1 to 3, **characterized in that** the support layer (4) consists of epoxy resin.

5. Bearing ring according to one of Claims 1 to 4, **characterized in that** the metallic particles consist of steel or of light metal, in particular of aluminium.

6. Bearing ring according to one of Claims 1 to 4, **characterized in that** the metallic particles consist of ferrosilicon.

7. Bearing ring according to one of Claims 1 to 6, **characterized in that** the nickel layer is applied by a chemical process.

## Revendications

1. Bague de palier (1) d'un palier lisse ou d'un palier à roulement qui présente une structure annulaire avec un chemin de roulement (2), la bague de palier (1) se composant d'un corps de base (3), une couche de support (4) étant appliquée au moins dans la région de chemin de roulement (2) sur le corps de base (3) et une couche en matériau dur (5) étant appliquée sur la couche de support (4), laquelle forme la surface du chemin de roulement (6),
**caractérisée en ce que**
la couche de support (4) se compose d'une résine durcissable et est munie de particules métalliques, la couche de matériau dur (5) se composant de nickel et le corps de base (3) se composant de plastique.

2. Bague de palier selon la revendication 1, **caractérisée en ce que** le corps de base (3) se compose d'un matériau thermoplastique.

3. Bague de palier selon la revendication 2, **caractérisée en ce que** des fibres de renforcement, en particulier des fibres de verre ou des fibres de carbone sont incorporées dans le plastique.

4. Bague de palier selon l'une quelconque des revendications 1 à 3, **caractérisée en ce que** la couche de support (4) se compose de résine époxy.

5. Bague de palier selon l'une quelconque des revendications 1 à 4, **caractérisée en ce que** les particules métalliques se composent d'acier ou de métal léger, en particulier d'aluminium.

6. Bague de palier selon l'une quelconque des revendications 1 à 4, **caractérisée en ce que** les particules métalliques se composent de ferrosilicium.

7. Bague de palier selon l'une quelconque des revendications 1 à 6, **caractérisée en ce que** la couche de nickel est appliquée par un processus chimique.
